(19) **Europäisches Patentamt**
**European Patent Office**
**Office européen des brevets**

(11) **EP 4 644 758 A1**

(12) **EUROPÄISCHE PATENTANMELDUNG**

(43) Veröffentlichungstag:
**05.11.2025 Patentblatt 2025/45**

(21) Anmeldenummer: **25401001.0**

(22) Anmeldetag: **25.03.2025**

(51) Internationale Patentklassifikation (IPC):
**F16M 11/04** (2006.01)     **F16M 11/42** (2006.01)
**F16F 7/14** (2006.01)

(52) Gemeinsame Patentklassifikation (CPC):
**F16M 11/045; F16F 7/14; F16M 11/425;**
F16M 2200/047; F16M 2200/08

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **25.03.2024 DE 102024108477**

(71) Anmelder: **Technische Universität Ilmenau
98684 Ilmenau (DE)**

(72) Erfinder:
• **Warnken, Nadine
98693 Ilmenau (DE)**
• **Zentner, Lena
98693 Ilmenau (DE)**

(54) **EINSTELLBARE VOLLSTÄNDIG NACHGIEBIGE FÜHRUNGSVORRICHTUNG MIT KONSTANTER KRAFT, DEREN ENTWURFSVERFAHREN UND EINSTELLUNG**

(57) Die Erfindung betrifft eine einstellbare vollständig nachgiebige Führungsvorrichtung mit konstanter Kraft, welche durch die Änderung der Vorspannung von nachgiebigen Elementen die Einstellung eines Kraftarbeitspunktes ermöglicht, ein dazugehöriges Verfahren für die Einstellung der Vorrichtung für eine vorgegebene Kraft sowie für die Dimensionierung der nachgiebigen Elemente der Führungsvorrichtung.

Die einstellbare vollständig nachgiebige Führungsvorrichtung mit konstanter Kraft besitzt eine große Bandbreite an Anwendungsfeldern. Diese umfassen Messtechnik, Wägetechnik, Präzisionstechnik, Nanofabrikation, Biomedizintechnik, Sport- und Reha-Geräte, Automobilindustrie, Robotik.

Fig. 1

## Beschreibung

### Gebiet der Erfindung

Die Erfindung betrifft eine einstellbare vollständig nachgiebige Führungsvorrichtung mit konstanter Kraft, welche durch die Änderung der Vorspannung von nachgiebigen Elementen die Einstellung eines Kraftarbeitspunktes ermöglicht, ein dazugehöriges Verfahren für die Einstellung der Vorrichtung für eine vorgegebene Kraft sowie für die Dimensionierung der nachgiebigen Elemente der Führungsvorrichtung.

Die einstellbare vollständig nachgiebige Führungsvorrichtung mit konstanter Kraft besitzt eine große Bandbreite an Anwendungsfeldern. Diese umfassen Messtechnik, Wägetechnik, Präzisionstechnik, Nanofabrikation, Biomedizintechnik, Sport- und Reha-Geräte, Automobilindustrie, Robotik.

### Stand der Technik

Die aus dem Stand der Technik bekannten nachgiebigen Führungsvorrichtungen mit konstanter Kraft weisen für eine kleine Kraftänderung um einen Kraftarbeitspunkt eine hohe Bewegung auf, eine kleine Kraftänderung $\Delta F$ bewirkt also eine große Positionsänderung, d. h. eine große Wegdifferenz $\Delta s$. Zu ihren Vorteilen gehören das Wegfallen der Notwendigkeit zu schmieren, kein Verschleiß und kein Spiel, d. h. der Wegfall eines unerwünschten toten Ganges, wie auch die Möglichkeit der Miniaturisierung und sehr leichte Skalierbarkeit. Darüber hinaus gehören solche Vorrichtungen zu den passiven Vorrichtungen, was bedeutet, dass keine zusätzliche Regelung mit Sensoren und Aktuatoren benötigt wird, um eine konstante Kraft zu gewährleisten. Dadurch sind solche Vorrichtungen kostengünstig und einfach in der Montage [1].

Aus dem Stand der Technik sind zwei Varianten für den Entwurf von vollständig nachgiebigen Führungsvorrichtungen mit konstanter Kraft bekannt. Bei der ersten Variante wird eine konstante Kraft durch Formoptimierung der nachgiebigen Elemente erzielt. Durch die Variation des Querschnitts, der Krümmung und des Materials über die Länge des Elements wird eine konstante Kraft erzielt [2, 3]. Diese Variante ist aufgrund ihrer komplexen Struktur anfällig für Produktionsfehler, welche Einfluss auf die Qualität der Vorrichtung haben. Außerdem ist eine Einstellung des Kraftarbeitspunktes bei dieser Variante nicht möglich.

Bei der zweiten Variante der Vorrichtung wird die konstante Kraft durch Kombinieren von nachgiebigen Elementen mit positiven und negativen Steifigkeiten erzielt. Diese sind so ausgelegt, dass die verschiedenen Steifigkeiten der Elemente sich ausgleichen, wodurch ein Bereich mit einer konstanten Kraft entsteht [4, 5]. Somit hat die Vorrichtung eine Steifigkeit, definiert als Differenzenquotient $\Delta F/\Delta s$ ($F$ - Kraft, $s$ - Weg), von Null und erzielt eine konstante Kraft über den betrachteten Bewegungsbereich $\Delta s$. Durch Verwendung einer Feder als nachgiebiges Element mit positiver Steifigkeit ($\Delta F/\Delta s > 0$) kann der Kraftarbeitspunkt anhand der Vorspannung der Feder eingestellt werden [6]. Ein Nachteil dieser Variante besteht darin, dass mehrere verschiedene Elemente benötigt werden, die aufeinander abgestimmt werden müssen. Dazu kommt das Problem, dass eine klassische Feder in der Vorrichtung die Skalierbarkeit (Miniaturisierung) erschwert oder sogar unmöglich macht. Durch Verwendung nachgiebiger Elemente als Federn kann zwar eine gewisse Miniaturisierung gewährleistet werden, diese würden aber zu einer komplexen Form führen. Somit hat diese Variante ähnliche Nachteile wie die Erstgenannte. Beide Varianten benötigen einen hohen Entwicklungsaufwand, um eine bestimmte konstante Kraft für einen vorgegebenen Anwendungsfall zu ermöglichen.

In der Literatur wurde auch bereits der Einfluss von Verbindungswinkel, Länge und Querschnitt der Balkenelemente eines komplexen Balken-Mechanismus auf seine Steifigkeit untersucht [7]. Allerdings konzentrieren sich die Ergebnisse der Untersuchungen nur auf einen bestimmten, festen Kraftarbeitspunkt. Weiterführende Untersuchungen zur Abhängigkeit der Parameter wurden nicht durchgeführt, wodurch die Anwendung auf eine einstellbare Führungsvorrichtung mit einstellbarem Kraftarbeitspunkt nicht möglich ist.

Basierend auf einer Literaturrecherche sind [8] und [9] die einzigen den Antragstellern bekannten Quellen, welche das Biegeverhalten bei unterschiedlichen Einspannungen nutzen, um den Kraftarbeitspunkt für einen Bereich mit einer konstanten Kraft einzustellen. Im Patent US11047458B1 [8] wird das Flächenträgheitsmoment entlang der Biegeachse durch Torsion verändert, um den Kraftarbeitspunkt einzustellen. Um trotzdem eine Bewegung in einer Ebene zu garantieren, wird bei diesem Verfahren ein starres Außengerüst benötigt. Somit ist die Vorrichtung keine reine nachgiebige Vorrichtung. Die Mittel zur Einstellung des Kraftarbeitspunktes befinden sich am Mechanismus und werden mitbewegt, woraus ein höherer Energieverbrauch resultiert. Dadurch werden mehrere Komponenten benötigt, was zu Erhöhung des Montageaufwandes und der Kosten führt. In [9] wird das Zusammenspiel der Winkel von zwei Elementen bezogen auf die Bewegungsrichtung verwendet, um den Kraftarbeitspunkt einzustellen. Dabei muss nicht nur der Winkel, sondern auch die Länge eines Elementes angepasst werden, und zwar an verschiedenen Stellen. Es werden hierfür mehrere nachgiebige Elemente benötigt, die jeweils einzeln angesteuert und aufeinander abgestimmt werden. Das erhöht die Fehlerquellen und den Steuerungs-/Regelungsaufwand. Zudem führt die Verwendung von mehreren Elementen zu einem komplexeren Aufbau. Die Führungselemente und die zu verstellenden Elemente sind in der Funktion getrennt und sind verschiedene Bauteile.

Die Nachteile der aus dem Stand der Technik bekannten einstellbaren nachgiebigen Führungsvorrichtungen lassen sich wie folgt zusammenfassen: Die Führungsvorrichtungen weisen komplexe Formen und einen komplexen Aufbau auf, ihre Auslegung erfordert komplexe und zeitaufwendige Entwurfsverfahren, was eine einfache Skalierbarkeit erschwert, insbesondere weil Starrkörperelemente vorhanden sind. Keine der Vorrichtungen verfügt über die Mittel zur Einstellung des Kraftarbeitspunktes derart, dass die Führungselemente und die zu verstellenden Elemente dasselbe Bauteil sind. Außerdem werden für die bekannten Vorrichtungen mehrere verschiedene nachgiebige Komponenten benötigt, die genau aufeinander abgestimmt werden müssen.

## Aufgabe der Erfindung

Der vorgestellten Erfindung liegt die Aufgabe zugrunde, eine Führungsvorrichtung bereitzustellen, welche die Nachteile der aus dem Stand der Technik bekannten einstellbaren Führungsvorrichtungen überwindet. Die Aufgabe schließt auch die Bereitstellung eines Verfahrens zur Auslegung und Einstellung einer solchen Führungsvorrichtung ein.

## Lösung der Aufgabe

Die Aufgabe der Erfindung wird gelöst durch eine einstellbare vollständig nachgiebige Führungsvorrichtung zur Führung eines Tisches mit den in Anspruch 1 angegebenen Merkmalen. Vorteilhafte Ausgestaltungen der Führungsvorrichtung sind in den Unteransprüchen 2 bis 12 offenbart. Ferner wird die Aufgabe der Erfindung gelöst durch ein Verfahren zur Auslegung und Einstellung einer solchen Führungsvorrichtung gemäß Anspruch 13.

Der Begriff "Tisch" ist in dieser Anmeldung breit auszulegen. Er umfasst beliebige Plattformen, die in einer Raumrichtung $x$, d. h. linear, in zwei Raumrichtungen $x, y$, d. h. in einer Ebene, oder in drei Raumrichtungen $x, y, z$, d. h. im dreidimensionalen Raum, verschiebbar sind. Umfasst sind z. B. $x$-$y$-Verschiebetische ($x$-$y$ stages), die eine genaue Positionierung im nm-Bereich in einer Ebene zulassen.

Wie im vorliegenden technischen Gebiet üblich, werden nachgiebige Elemente in dieser Anmeldung auch als Balken oder Balkenelemente bezeichnet.

## Kurze Beschreibung der Zeichnungen

Fig. *1*      - Frontansicht einer Führungsvorrichtung mit einem zu führenden Tisch mit rechteckigem Querschnitt mit gespiegelten nachgiebigen Elementen

Fig. *2*      - Draufsicht der Führungsvorrichtung mit dem zu führenden Tisch mit rechteckigem Querschnitt mit gespiegelten nachgiebigen Elementen

Fig. *3*      - Draufsicht einer Führungsvorrichtung mit einem zu führenden Tisch mit dreieckigem Querschnitt mit gespiegelten nachgiebigen Elementen

Fig. *4*      - Draufsicht einer Führungsvorrichtung mit einem zu führenden Tisch mit rundem Querschnitt mit gespiegelten nachgiebigen Elementen

Fig. *5*      - Frontansicht einer Führungsvorrichtung mit einem zu führenden Tisch mit rechteckigem Querschnitt mit unterhalb des Tisches befestigten nachgiebigen Elementen

Fig. *6*      - Draufsicht der Führungsvorrichtung mit dem zu führenden Tisch mit rechteckigem Querschnitt und unterhalb des Tisches befestigten nachgiebigen Elementen

Fig. *7*      - Frontansicht einer Führungsvorrichtung mit einem zu führenden Tisch mit rechteckigem Querschnitt für Null-Kraft-Anwendungen

Fig. *8*      - Frontansicht einer Führungsvorrichtung mit einem zu führenden Tisch mit rechteckigem Querschnitt mit leichter Winkelabweichung $\varphi$ der Führungsvorrichtung von der Führungsrichtung

Fig. *9*      - Kennlinie der Führungsvorrichtung mit leichter Winkelabweichung $\varphi$ von der Führungsrichtung

Fig. *10*    - Frontansicht einer Führungsvorrichtung mit einem zu führenden Tisch mit rechteckigem Querschnitt mit Neigungswinkel $\zeta$ des Gestells gegenüber der Richtung, die zur Führungsrichtung orthogonal ist

Fig. *11*    - Frontansicht einer Führungsvorrichtung mit einem zu führenden Tisch mit rechteckigem Querschnitt mit verschiebbarer Befestigungsstelle der nachgiebigen Elemente parallel zur Führungsrichtung

Fig. *12*    - Prinzipieller Aufbau der einstellbaren vollständig nachgiebigen Führungsvorrichtung mit konstanter Kraft (einseitig frei, mit einem geraden nachgiebigen Element)

Fig. *13*    - Prinzipieller Aufbau der einstellbaren vollständig nachgiebigen Führungsvorrichtung mit konstanter Kraft (eingespannt, kleinerer Kraftarbeitspunkt)

Fig. *14*    - Prinzipieller Aufbau der einstellbaren vollständig nachgiebigen Führungsvorrichtung mit konstanter Kraft (eingespannt, größerer Kraftarbeitspunkt)

Fig. *15*    - Rechteckiger Querschnitt eines nachgiebigen Elementes

Fig. *16*    - Runder Querschnitt eines nachgiebigen Elementes

Fig. *17*    - Kennlinie für minimalen und maximalen Kraftarbeitspunkt

Fig. *18*    - Flussdiagramm des Verfahrens zur Dimensionierung der nachgiebigen Elemente und zur Bestimmung ihrer Anzahl für die einstellbare vollständig nachgiebige Führungsvorrichtung mit konstanter Kraft

## Detaillierte Beschreibung der Lösung

Die Erfindung wird nachfolgend unter Verwendung der oben beschriebenen Zeichnungen detailliert erläutert.
Die Grundidee der hier betrachteten vollständig nachgiebigen Führungsvorrichtung mit konstanter Kraft besteht in der Anwendung von einfachen, vorzugsweise geraden nachgiebigen Elementen mit konstantem Querschnitt. Die konstante Kraft wird unter Ausnutzung der Vorspannung der nachgiebigen Elemente durch Einstellung des Verbindungsabstandes zum Tisch und des Verbindungswinkels zum Gestell unter Berücksichtigung der Abmessungen der nachgiebigen Elemente erreicht.
Die erfindungsgemäße vollständig nachgiebige Führungsvorrichtung mit konstanter Kraft umfasst ein oder mehrere nachgiebige Elemente mit konstantem Querschnitt. Ihre Funktion erhält die Führungsvorrichtung allein durch die Nachgiebigkeit dieser Elemente, deswegen wird diese als vollständig nachgiebige Führungsvorrichtung bezeichnet. Diese Elemente sind vorzugsweise gleichartig aufgebaut und zum Führen eines Tisches geeignet. Die Elemente sind vorzugsweise gerade gefertigt, werden aber im eingespannten Zustand in der Führungsvorrichtung verwendet und nehmen dabei in der Regel eine gebogene Form an. Die Verwendung von geraden nachgiebigen Elementen hat den Vorteil, dass eine mit solchen geraden Elementen ausgestattete Führungsvorrichtung einfach und kostengünstig in der Herstellung ist und besonders einfach zu dimensionieren ist, wie in den Ausführungsbeispielen 1 und 2 detailliert erläutert wird. Die nachgiebigen Elemente können auch vorgebogen ausgeführt werden, jedoch ist die Dimensionierung der Führungsvorrichtung dann wesentlich komplizierter und erfordert eine zusätzliche Anpassung der Parameter Verbindungswinkel $\beta$ und Verbindungsabstand $p$, was einen zusätzlichen Berechnungsaufwand für jeden Krümmungsradius (siehe Ausführungsbeispiel 3) zur Folge hat.
Werden mehrere nachgiebige Elemente verwendet, befinden sich diese vorzugsweise in Parallelschaltung in Gruppen. Die nachgiebigen Elemente sind jeweils mit einem Ende fest mit dem zu führenden Tisch verbunden. Nachgiebige Elemente sind mindestens an zwei Seiten des Tisches fest mit dem Tisch verbunden. Jedes nachgiebige Element ist somit an einem Ende mit dem zu führenden Tisch fest verbunden. Das Ende des nachgiebigen Elements steht dabei senkrecht auf der Seite des Tisches, sodass die Verbindung orthogonal zu der Führungsrichtung des Tisches steht. Das andere Ende des Elementes ist in einem Verbindungsabstand $p$ vom Tisch, gemessen orthogonal zur Führungsrichtung, mit dem Gestell verbunden. Diese Verbindung ist so ausgelegt, dass ein Verbindungswinkel $\beta$ zwischen dem Gestell und der Tangente zum Ende des nachgiebigen Elementes entsteht. Die Parameter $p$ und $\beta$ sind verstellbar, indem für jedes nachgiebige Element ein Mittel am Gestell vorhanden ist, welches aus Schub- und Drehgelenken mit Aktuatoren besteht oder als ein Mechanismus vorzugsweise mit nur einem Aktuator aufgebaut ist. Dieses Mittel realisiert die Verbindung des nachgiebigen Elements mit dem Gestell und gewährleistet durch die Änderung des Verbindungsabstandes zum Tisch und des Verbindungswinkels zum Gestell die Einstellung einer Kennlinie der Führungsvorrichtung. Die Kennlinie der Führungsvorrichtung mit konstanter Kraft beschreibt den Zusammenhang zwischen dem Weg $s$ des Tisches und der Kraft $F$ in die gleiche Richtung, es handelt sich somit um eine Kraft-Weg-Kennlinie. Die Einstellung der Kennlinie kann auch während des Betriebes der Führungsvorrichtung stattfinden, z. B. wenn Objekte mit verschiedenem Gewicht auf den Tisch platziert werden. Die Abmessungen der nachgiebigen Elemente bestimmen den Bewegungs- und Kraftarbeitsbereich der Führungsvorrichtung. Der Verbindungsabstand und der Verbindungswinkel legen den Kraftarbeitspunkt fest. Abhängig von den gewählten Abmessungen der nachgiebigen Elemente kann der Kraftarbeitspunkt im Bereich von Nano-Newton bis Kilo-Newton liegen, wodurch die Vorrichtung für die Anwendung z. B. zur Kraftkompensation, Kraftbegrenzung und Kraftmessung sowohl in der Nanofabrikation als auch in der Robotik geeignet ist.

Die Kennlinie der Führungsvorrichtung mit konstanter Kraft besteht typischerweise aus drei Bereichen. Im ersten Bereich steigt die Kurve der Kennlinie, im nächsten Bereich stellt sich eine konstante Kraft ein, sodass sich ein Plateau ausbildet, und im letzten Bereich steigt die Kurve wieder an. In der Mitte des zweiten, nahezu waagerechten Bereiches, also des Plateaus, befindet sich der Punkt mit dem Kraftwert, welcher als Kraftarbeitspunkt bezeichnet wird. Dieser liegt in der Mitte des Wegbereiches mit nahezu konstantem Kraftverlauf, das ist der Wegbereich für die konstante Kraft, bezeichnet als Bewegungsbereich. Der Bewegungsbereich erstreckt sich also über das Plateau.

Ist der Verbindungsabstand $p$ kleiner als die Länge des nachgiebigen Elementes und der Verbindungswinkel $\beta \neq \pi$, kommt es zur Biegung des nachgiebigen Elementes, wodurch das nachgiebige Element vorgespannt wird. Durch die Verkleinerung des Verbindungswinkels $\beta$ und/oder durch Erhöhung des Verbindungsabstandes $p$ erhöht sich die Steifigkeit des nachgiebigen Elementes und somit der ganzen Führungsvorrichtung. Durch die richtige Wahl des Verbindungsabstandes $p$ und des Verbindungswinkels $\beta$ können Verformungen gefunden werden, bei denen es zu einem Bereich mit Null-Steifigkeit, d. h. einer Steifigkeit $\Delta F/\Delta s = 0$, und somit zu einem konstanten Kraftverlauf kommt.

Ebenso kann für verschiedene Verbindungsabstände ein geeigneter Verbindungswinkel gefunden werden, so dass sich ein Bewegungsbereich ergibt, in dem die Steifigkeit gleich Null ist. Durch kleine Verbindungsabstände kommt es zu größeren Krümmungen des nachgiebigen Elementes. Somit werden größere Kräfte in der Führungsrichtung benötigt, um nachgiebige Elemente in der Führungsrichtung zu verschieben. Dadurch wird auch der Kraftarbeitspunkt erhöht. Somit ist es möglich, den Kraftarbeitspunkt durch die Veränderung des Verbindungsabstandes und des Verbindungswinkels einzustellen, ohne dabei die Abmessungen des nachgiebigen Elementes zu verändern.

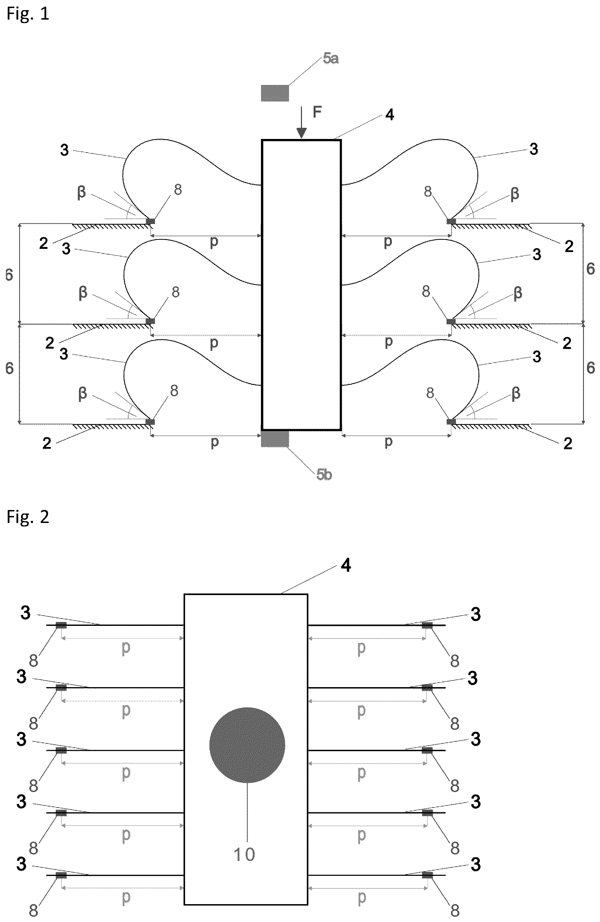

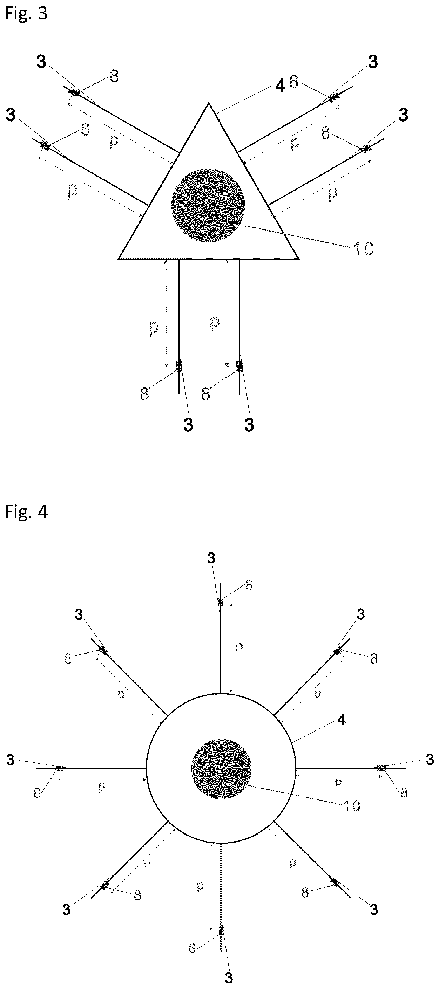

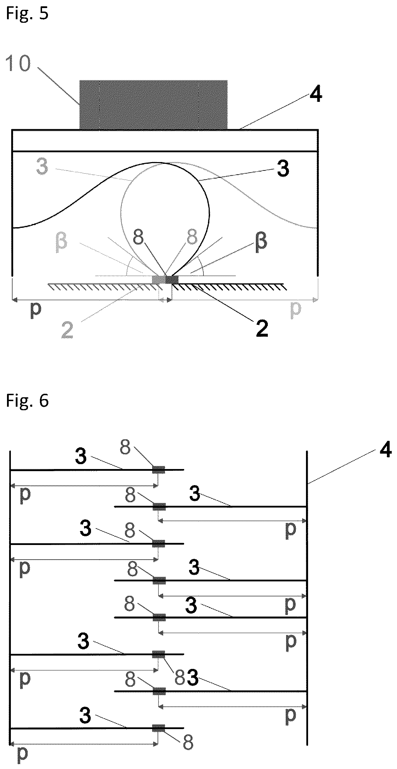

Die vollständig nachgiebige Führungsvorrichtung mit konstanter Kraft kann eine unterschiedliche Anzahl der nachgiebigen Elemente beinhalten. Wenn nur ein Element verwendet wird, ist eine zusätzliche reibungslose bzw. reibungsarme Führung des Tisches erforderlich. Zwei oder mehrere Elemente werden am Tisch so befestigt, dass sich alle Reaktionskräfte und -momente in allen Richtungen, die orthogonal zur Führungsrichtung sind, aufheben. Das wird wie folgt realisiert: Werden die nachgiebigen Elemente an zwei Seiten des Tisches befestigt, so sollte eine solche Anordnung gewählt werden, die durch eine Spiegelung oder durch das Drehen der Elemente um eine zur Führungsrichtung parallele Achse um einen Winkel von 180° entsteht. Die Elemente können auch an drei, vier oder mehr Seiten/Bereichen des Tisches und gruppenweise befestigt werden. Auch hier sollten die Lagen der Elemente für jede Seite/jeden Bereich des Tisches gruppenweise z. B. durch Spiegelung oder durch Rotation um die zur Führungsrichtung parallele Achse mit einem Winkel von 360°/$m$, mit m - Anzahl der Seiten/Bereiche am Tisch, erhalten werden. Der Begriff "Bereich" bezieht sich hier auf Tische, die keine geraden Seiten haben, also z. B. auf runde oder elliptische Tische oder auf Abschnitte einer Seite eines Tisches. Mögliche Anordnungen sind in *Fig.* 1 bis *Fig. 4* dargestellt. Hierbei zeigt *Fig. 1* die Vorderansicht (Frontansicht) einer Führungsvorrichtung mit sechs nachgiebigen Elementen *3*. Die Elemente *3* bilden zwei Gruppen aus jeweils drei Elementen *3*, die mit einem Ende spiegelsymmetrisch an zwei gegenüberliegenden Seiten eines zu führenden Tisches *4*, der eine rechteckige Form hat, befestigt sind. Das zweite Ende der nachgiebigen Elemente *3* ist jeweils mit einem Abschnitt eines Gestells *2* verbunden. Diese Verbindung wird mithilfe eines Mittels *8* realisiert, welches entlang des jeweiligen Abschnitts des Gestells *2* verschiebbar ist. Die Abschnitte des Gestells 2 sind ebenfalls spiegelsymmetrisch beidseitig des Tisches *4* positioniert, ohne direkt mit diesem verbunden zu sein. Auf beiden Seiten sind jeweils drei Abschnitte des Gestells *2* parallel zueinander mit einem Abstand *6* positioniert. Durch die Position der Mittel *8* werden ein Verbindungsabstand $p$ und ein Verbindungswinkel $\beta$ eingestellt, wodurch die Steifigkeit der nachgiebigen Elemente *3* eingestellt wird. Der Tisch *4* kann mit einer konstanten Kraft $F$ in einem Bewegungsbereich zwischen den Anschlägen *5*a und *5*b bewegt werden. Durch Verschiebung der Mittel *8* können der Verbindungsabstand $p$ und der Verbindungswinkel $\beta$ und damit die Steifigkeit der nachgiebigen Elemente *3* geändert werden, wodurch der Betrag der konstanten Kraft $F$, d. h. der Kraftarbeitspunkt der Führungsvorrichtung eingestellt werden kann. Das wird in Ausführungsbeispiel 1 noch näher erläutert. *Fig. 2, Fig. 3* und *Fig. 4* zeigen die Führungsvorrichtung von oben für rechteckige, dreieckige und runde Tische *4*. In diesen ist eine zusätzliche Kraft durch ein auf dem Tisch *4* positioniertes Objekt *10* realisiert. Es ist auch möglich, die Elemente *3* unterhalb des Tisches *4* anzubringen. Dies führt zu kleineren Abmessungen der nachgiebigen Führungsvorrichtung. Eine solche Anordnung ist in *Fig. 5* von vorne und in *Fig.* 6 von oben dargestellt. In der Ansicht von oben (Fig. *6*) ist der Tisch *4* nur durch zwei Seitenkanten angedeutet. Dadurch werden zwei unterhalb des Tisches *4* befindliche Gruppen von jeweils vier nachgiebigen Elementen *3* sichtbar, die mit zwei gegenüberliegenden Seiten des Tisches *4* verbunden sind. In Fig. *5* verdecken sich die Elemente einer Gruppe. In Fig. *6* sind die Abschnitte des Gestells *2* durch die nachgiebigen Elemente *3* verdeckt.

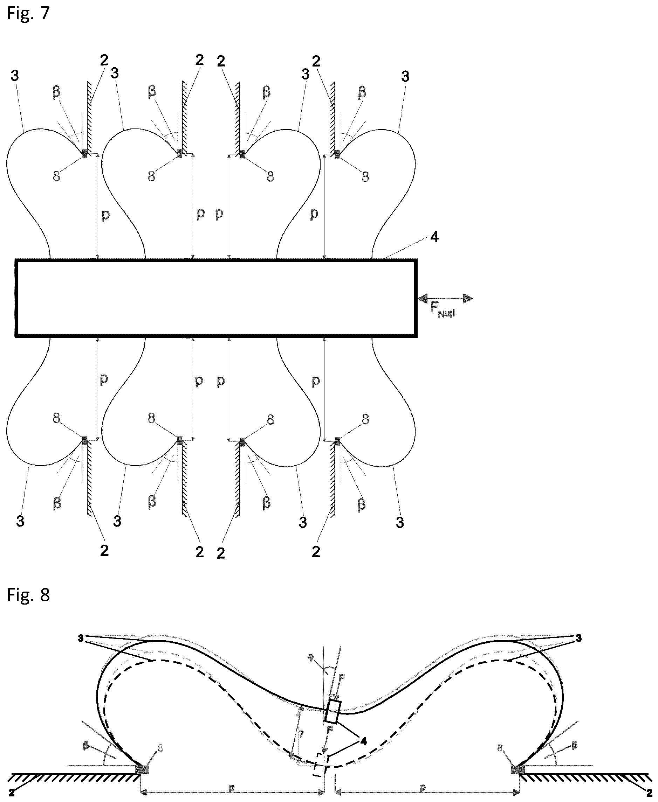

Werden die nachgiebigen Elemente bezüglich der Ebene, die orthogonal zur Führungsrichtung ist, gespiegelt und alle Elemente zusätzlich bis zum Kraftarbeitspunkt in die Führungsrichtung vorgespannt, so wird bei vernachlässigbarem Gewicht des Tisches oder mit zusätzlicher Kompensation seines Gewichtes eine Führung mit Null-Kraft $F_{Null}$ realisiert ($F_{Null}$ = 0). Eine solche Ausführungsform ist in *Fig. 7* dargestellt. Die mit der linken Seite des Tisches *4* verbundenen Elemente *3* üben eine Kraft *F* auf den Tisch *4* aus. Die mit der rechten Seite des Tisches *4* verbundenen Elemente 3 üben eine entgegengesetzt gerichtete, aber betragsmäßig gleiche Kraft *-F* auf den Tisch *4* aus, sodass eine Kraft $F_{Null}$ = 0 resultiert. Der Tisch *4* ist somit kräftefrei in der Führungsrichtung bewegbar. Das Gewicht des Tisches ist vernachlässigbar, wenn der Verbindungsabstand um nicht mehr als 5 % verfälscht wird. Eine Kompensation des Tischgewichtes kann durch eine waagerechte Orientierung der Führungsrichtung des Tisches geschehen, wobei eine zusätzliche reibungsarme Führung des Tisches, beispielsweise durch einen nahezu gerade waagerecht beweglichen Mechanismus, notwendig ist.

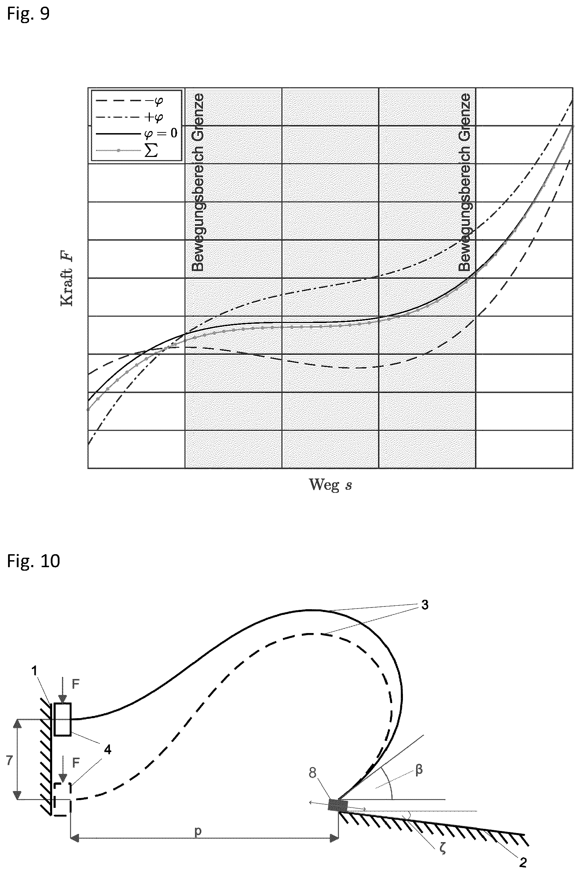

Vorzugsweise sollte die Führungsrichtung parallel zur Schwerkraft gewählt werden, wobei das Gestell waagerecht steht. Eine leichte Abweichung $\pm\varphi$ des Tisches (5 %) von der Führungsrichtung, die zum Gestell orthogonal sein soll, (bzw. des Gestells von der waagerechten Position), wie in *Fig. 8,* ist zulässig, insbesondere, wenn die Gruppen nachgiebiger Elemente an gegenüberliegenden Seiten/Bereichen des Tisches angeordnet sind. In diesem Fall heben sich die Ungenauigkeiten bei den Kennlinien von gegenüberliegenden Elementen so auf, dass die erwünschte Kennlinie mit konstanter Kraft sich einstellt. Dies zeigt auch das Kraft-Weg-Diagramm in *Fig. 9.* Die halbierte Summe von dem Kraft-Weg-Zusammenhang mit der positiven Abweichung $+\varphi$ und dem Kraft-Weg-Zusammenhang mit der negativen Abweichung $-\varphi$ ist nahezu identisch mit dem Kraft-Weg-Zusammenhang ohne Abweichung ($\varphi$ = 0). Somit ist die einstellbare vollständig nachgiebige Führungsvorrichtung mit konstanter Kraft invariant bezüglich einer leichten Neigung des Gestells.

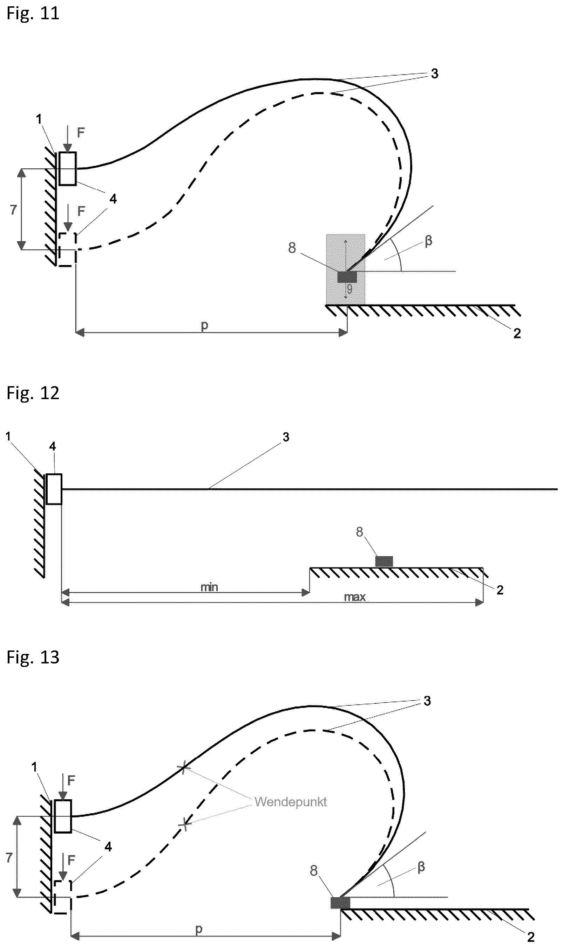

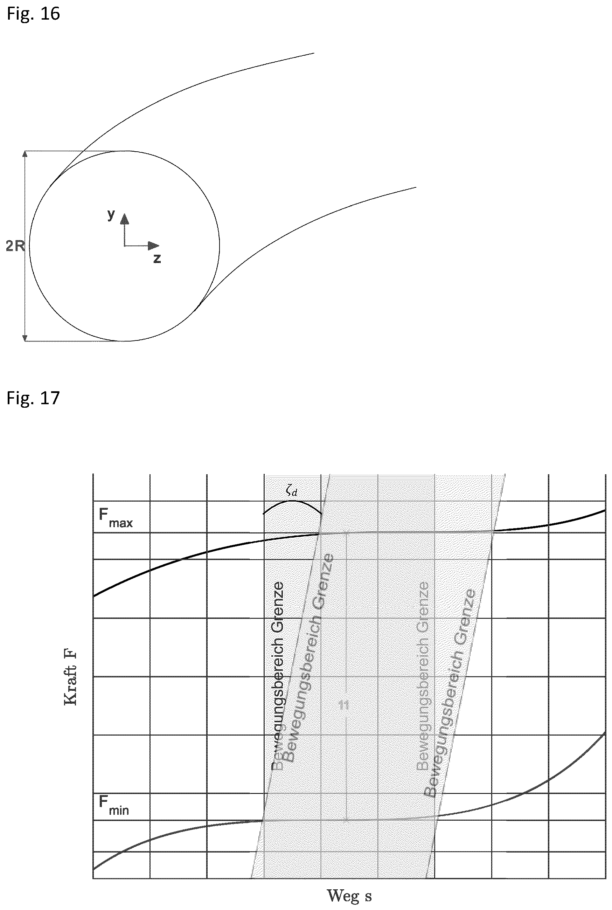

Wird ein zusätzlicher Winkel $\zeta$ für das Gestell eingestellt, wie in Fig. 10 dargestellt, erhält der Bewegungsbereich einen proportionalen Winkel $\zeta_d$ zur Kraftachse im Kraft-Weg-Diagramm Fig. 17. Dadurch ändert sich der Kraft-Weg-Zusammenhang im Bewegungsbereich. Bei geeigneter Wahl kann so das Verhalten mit der konstanten Kraft über den ganzen Kraftbereich verbessert werden, sodass eine geringere Kraftabweichung im Bewegungsbereich vorliegt. Ein ähnlicher Effekt kann auch erzielt werden, wenn das Mittel 8 zur Einstellung des Verbindungsabstands *p* und -winkels $\beta$ einen zusätzlich in der vertikalen Richtung einstellbaren Abstand *9* besitzt, wie in Fig. *11* gezeigt. Dadurch kann die Lage des Bewegungsbereiches im Kraft-Weg-Diagramm Fig. *17* nach links oder rechts verschoben werden.

Um den Bewegungsbereich nicht zu überschreiten, können Anschläge verwendet werden, die den Bewegungsbereich mechanisch begrenzen. In der Anordnung gemäß *Fig. 1* begrenzen die Anschläge 5a bzw. 5b den oberen bzw. unteren Bewegungsbereich. Das garantiert, dass die zulässigen Dehnungen vorgespannter nachgiebiger Elemente nicht überschritten werden.

**Liste der Bezugszeichen und Formelzeichen**

|  |  |
|---|---|
| *1* | - Parallelführung |
| *2* | - Gestell |
| *3* | - Nachgiebiges Element |
| *4* | - Tisch |
| *5* | - Anschläge |
| *6* | - Abstand von Abschnitten des Gestells |
| *7* | - Bewegungsbereich |
| *8* | - Mittel |
| *9* | - Abstand des Gestells zur Grundposition |
| *10* | - Objekt |
| *11* | - Kraftarbeitspunkt |
| *p* | - Verbindungsabstand |
| $\beta$ | - Verbindungswinkel |
| *L* | - Balkenlänge |
| *h* | - Balkenhöhe |
| *b* | - Balkenbreite |
| *R* | - Balkenradius |
| *E* | - Elastizitätsmodul |
| $\sigma$ - | - zulässige Spannung |
| *F* | - Kraftarbeitspunkt |
| $F_{min}$ | - minimaler Kraftarbeitspunkt |
| $F_{max}$ | - maximaler Kraftarbeitspunkt |

$\tilde{F}$     - dimensionslose Kraftkonstante
$I_z$     - Flächenträgheitsmoment von z-Achse
$I_y$     - Flächenträgheitsmoment von y-Achse
$r$     - Krümmungsradius
$n$     - Balkenanzahl
$\tilde{M}$     - dimensionslose Momentkonstante
$\zeta$     - Winkel des Gestells

$\zeta_d$     - zu $\zeta$ proportionaler Winkel
$\varphi$     - Abweichung des Tisches von der Führungsrichtung
$\Sigma$     - halbierte Summe

**Ausführungsbeispiel 1**

In *Fig. 12* bis *Fig. 14* ist ein nachgiebiges Element *3* dargestellt. Dieses ist an einer Seite mit einem zu führenden Tisch *4* verbunden, welcher durch eine zusätzliche reibungsfreie Parallelführung *1* gelagert ist. Das Element ist in der Richtung, orthogonal zur Führungsrichtung, mit dem Tisch *4* verbunden. Auf der anderen Seite ist es über ein Mittel *8* zur Verstellung des Verbindungsabstandes und -winkels mit dem Gestell *2* verbunden. Dabei ist das Gestell *2* orthogonal zur Führungsrichtung positioniert.

Der bevorzugte Verbindungsabstand *p* liegt im Bereich $p \in [0{,}5\,L;\,0{,}85\,L]$, wobei *L* die Länge des nachgiebigen Elementes angibt. Die Parallelführung sollte vorzugsweise mit vernachlässigbarer Reibung gewählt werden. Reibungsfreie Führung ohne eine zusätzliche reibungsfreie Parallelführung kann beispielsweise durch einen symmetrischen Aufbau der nachgiebigen Elemente erzielt werden. Dadurch heben sich Kräfte orthogonal zur Bewegungsrichtung und Momente die an dem Tisch *4* wirken auf. Die Zusammenhänge (F1), (F2), (F4) und (F7) werden durch Polynome dargestellt. Es wird nicht ausgeschlossen, dass andere Form mathematischer Zusammenhänge zwischen den Parametern herrschen, solange sich ähnliche Werte für die beteiligten Parameter ergeben. Alle Berechnungsverfahren sind in SI-Einheiten angegeben. Mit Tilde gekennzeichnete Größen sind dimensionslos.

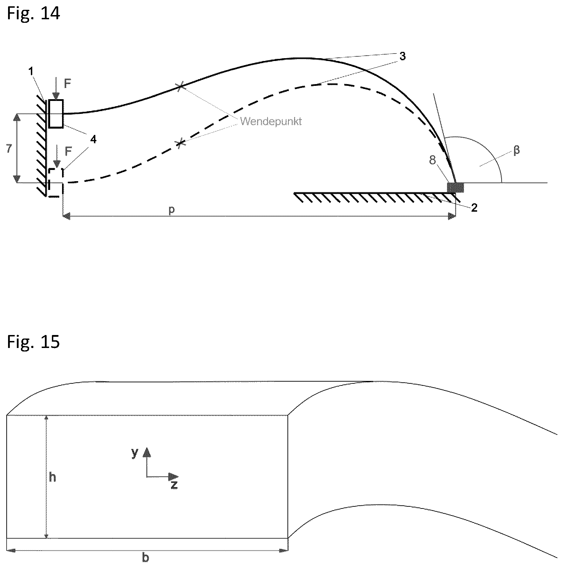

Für die betrachtete Führungsvorrichtung gibt es für jeden Verbindungsabstand *p* einen Verbindungswinkel $\beta$, bei dem es zur Führung mit konstanter Kraft kommt. In *Fig. 13* ist ein nachgiebiges Element für einen kleinen Kraftarbeitspunkt *11* (s. *Fig. 17*) und in *Fig. 14* für einen großen Kraftarbeitspunkt *11* gezeigt. Dabei muss der Verbindungsabstand *p* und der Verbindungswinkel $\beta$ ein Verhältnis aufweisen, welches durch folgendes Polynom beschrieben werden kann:

$$\beta(p) = \frac{a_1}{L^2}\,p^2 + \frac{a_2}{L}\,p + a_3 \qquad\qquad (F1)$$

Die Polynomkoeffizienten liegen bevorzugt in den Intervallen: $a_1 \in [1{,}98;\,2{,}52]$; $a_2 \in [-0{,}12;\,0{,}6]$; $a_3 \in [-0{,}14;\,0{,}098]$. Besonders bevorzugt werden Polynomkoeffizienten von $a_1 = 2{,}248$; $a_2 = 0{,}2363$; $a_3 = -0{,}0223$.

Der Bewegungsbereich *7* beginnt auf gleichem Niveau mit der Verbindungsstelle des nachgiebigen Elements *2* am Gestell, gemessen orthogonal zur Führungsrichtung. Außerhalb des Bewegungsbereiches kommt es zu erhöhten Steifigkeiten. Die Kennlinien sind für einen maximalen $F_{max}$ und einen minimalen $F_{min}$ Kraftarbeitspunkt in *Fig. 17* dargestellt. Hierbei sollte der maximale Kraftarbeitspunkt $F_{max}$ vorzugsweise kleiner als das 2,3-fache von minimalem Kraftarbeitspunkt $F_{min}$ sein. Zwischen den dargestellten Kurven kann der Kraftarbeitspunkt *F* durch Anpassung von Verbindungsabstand *p* und -winkel $\beta$ eingestellt werden. Dabei unterliegt der Kraftarbeitspunkt *F* und der Verbindungsabstand *p* einem Zusammenhang, der in Polynomform dargestellt werden kann:

$$p(F) = b_1 L \frac{\tilde{F}}{F_{min}}^2 F^2 + b_2 L \frac{\tilde{F}}{F_{min}} F + b_3 L \qquad\qquad (F2)$$

Die Polynomkoeffizienten liegen bevorzugt in den Intervallen $b_1 \in [0{,}00029;\,0{,}00048]$; $b_2 \in [-0{,}048;\,-0{,}043]$; $b_3 \in [1{,}14;\,1{,}17]$. Besonders bevorzugt werden Polynomkoeffizienten von $b_1 = 0{,}000385$; $b_2 = -0{,}04547$; $b_3 = 1{,}156$.

Für einen maximalen Verbindungsabstand *p* von 0,85-fachen der Länge *L* liegt die Kraftkonstante $\tilde{F}$ bevorzugt im Bereich $\tilde{F} \in [7{,}0525;\,7{,}2171]$ mit einem besonders bevorzugten Wert von $\tilde{F} = 7{,}08105$. Jedem abweichenden maximalen Verbindungsabstand entspricht eine andere Kraftkonstante.

Um eine konstante Kraft innerhalb des Bewegungsbereiches *7* zu erhalten, sollte die Länge *L* des nachgiebigen Elementes deutlich länger als der Bewegungsbereich *7* sein, vorzugsweise, wie folgt:

$$L \geq \frac{1}{0{,}15} \cdot \text{Bewegungsbereich 7} \qquad (F3)$$

Um Biegungen außerhalb der betrachteten Ebene zu verhindern, muss das Flächenträgheitsmoment $I_z$ des Querschnittes des Elementes um die zur Führungsrichtung parallele Achse deutlich kleiner sein als das Flächenträgheitsmoment $I_y$ um die dazu orthogonale Achse. Außerdem sollen die Querschnittabmessungen deutlich kleiner, vorzugsweise zehnmal kleiner, sein als die Länge und der Krümmungsradius $r$ des belasteten nachgiebigen Elementes (Schlankheitsbedingung). Für rechteckige bzw. runde Querschnitte sind die $y$- und $z$-Achsen in *Fig. 15* bzw. *Fig. 16* dargestellt. Dabei unterliegt der maximale Krümmungsradius r folgendem Zusammenhang:

$$r(\tilde{F}) = c_1 L \frac{F_{max}\tilde{F}^4}{F_{min}} + c_2 L \frac{F_{max}\tilde{F}^3}{F_{min}} + c_3 L \frac{F_{max}\tilde{F}^2}{F_{min}} + c_4 L \frac{F_{max}\tilde{F}}{F_{min}} + c_5 L. \qquad (F4)$$

Die Polynomkoeffizienten liegen bevorzugt in den Intervallen: $c_1 \in [7{,}45 * 10^{-06}; 1{,}053 * 10^{-05}]$; $c_2 \in [-0{,}00061; -0{,}00045]$; $c_3 \in [0{,}01; 0{,}014]$; $c_4 \in [-0{,}15; -0{,}12]$; $c_5 \in [0{,}75; 0{,}81]$. Besonders bevorzugt sind Polynomkoeffizienten von $c_1 = 8{,}993e^{-06}$; $c_2 = -0{,}0005298$; $c_3 = 0{,}01219$; $c_4 = -0{,}136$; $c_5 = 0{,}7778$.

Zur Ermittlung der Querschnittsabmessungen für einen Bereich der Kraftarbeitspunkte *11* wird folgender Zusammenhang verwendet:

$$I_z = \frac{F_{min}L^2}{\tilde{F}En} \qquad (F5)$$

Hierbei ist $E$ das Elastitätsmodul des Materials des nachgiebigen Elementes und $n$ die Anzahl der am Tisch *4* parallel befestigten Elemente.

Bei hohen Kraftarbeitspunkten mit kleinen Längen nachgiebiger Elemente kann es zu Konflikten mit der Schlankheitsbedingung kommen. In diesem Falle kann deren Anzahl $n$ erhöht werden. Dabei muss beachtet werden, dass die nachgiebigen Elemente in Parallelschaltung belastet werden. Durch die höhere Anzahl der Elemente wird deren Querschnittabmessung und somit das Flächenträgheitsmoment reduziert. Bei der Anordnung der nachgiebigen Elemente muss die Biegung der Balken beachtet werden. Die Verbindungen mit dem Gestell *2* sollen deswegen mindestens einen bevorzugten Abstand *6*, siehe *Fig. 1,* vom 0,35-fachen der Länge des nachgiebigen Elementes in Bewegungsrichtung aufweisen.

Um eine reine elastische Verformung zu garantieren, muss zusätzlich folgendes für einen rechteckigen bzw. runden Querschnitt gelten:

$$\frac{h}{2} \leq \frac{\sigma L}{\tilde{M}E} \quad \text{oder} \quad R \leq \frac{\sigma L}{\tilde{M}E} \qquad (F6)$$

Dabei ist $\sigma$ zulässige Spannung des Materials, $h$ Höhe des Querschnittes oder $R$ Radius eines runden Querschnittes, s. *Fig. 15* oder *Fig. 16,* und $\tilde{M}$ ergibt sich aus

$$\tilde{M}(\tilde{F}) = d_1 \frac{F_{max}\tilde{F}^2}{F_{min}} + d_2 \frac{F_{max}\tilde{F}}{F_{min}} + d_3 \qquad (F7)$$

Die Polynomkoeffizienten liegen bevorzugt in den Intervallen: $d_1 \in [-0{,}011; -0{,}0098]$; $d_2 \in [0{,}58; 0{,}61]$; $d_3 \in [0{,}093; 0{,}2]$. Besonders bevorzugt sind Polynomkoeffizienten von $d_1 = -0{,}01025$; $d_2 = 0{,}5952$; $d_3 = 0{,}1428$.

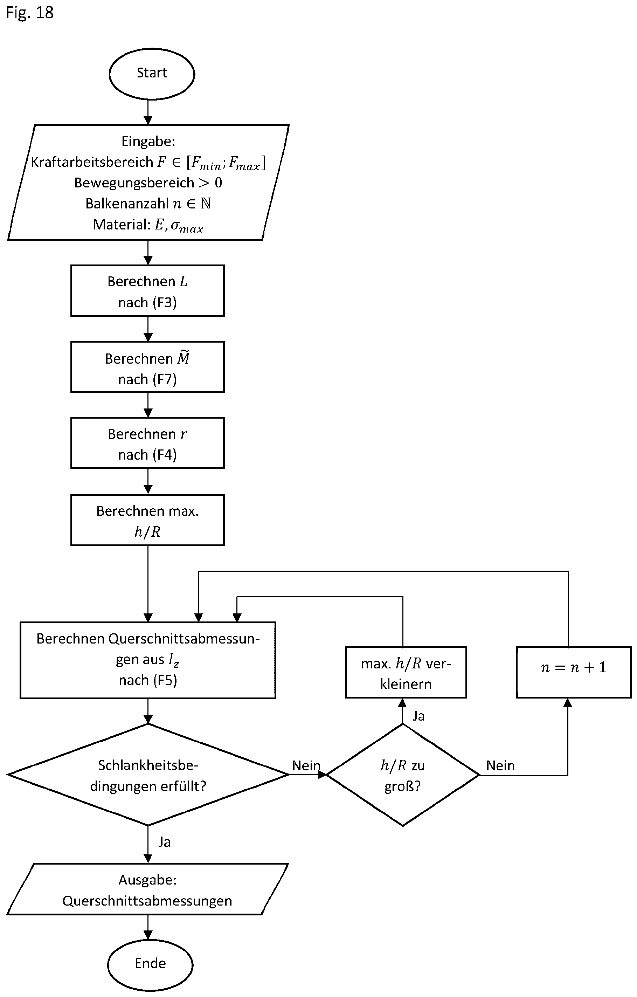

Mit den Zusammenhängen (F3) bis (F7) lässt sich ein Verfahren definieren, welches es erlaubt, die Abmessungen der nachgiebigen Elemente sowie deren Anzahl zu ermitteln. Diese machen die einstellbare vollständig nachgiebige Führungsvorrichtung mit konstanter Kraft aus. Ein solches Verfahren ist in *Fig. 18* anhand eines Flussdiagramms schematisch dargestellt. Als Eingabe für die Entwicklung der Führungsvorrichtung wird der Bereich für die Kraftarbeitspunkte vorgegeben $F \in [F_{min}; F_{max}]$, also der Kraftarbeitsbereich, welcher größer als Null sein sollte, der Bewegungsbereich *7*, welcher größer als Null sein sollte, die Anzahl $n \in \mathbb{N}$ der nachgiebigen Elemente und das Elastizitätsmodul $E$ sowie die zulässige Spannung $\sigma$ des Materials der nachgiebigen Elemente. Mit diesen Werten werden die Länge *L* der Elemente nach (F3), die dimensionslose Momentkonstante $\tilde{M}$ nach (F7), der maximale Krümmungsradius *r* nach (F4) und der maximale Wert für *h* oder *R* nach (F6) ermittelt. Dabei sind die Eingaben und die gesuchten Größen frei gewählt werden. Die Reihenfolge der Ermittlungen sollte dann nur soweit eingehalten werden, dass zunächst die Parameter berechnet werden, welche in den Zusammenhängen benötigt werden. So können die Querschnittsabmessungen anhand des Flächenträgheitsmomentes $I_z$ nach (F5) ermittelt werden. Im Anschluss werden die Schlankheitsbedingungen überprüft. Sind diese nicht erfüllt und es stellt sich heraus, dass der Parameter *h* bzw. *R* zu groß ist, wird dieser verkleinert, andernfalls wird die Anzahl *n* der Elemente erhöht. Werden mit den gefundenen Querschnittsabmessungen die Schlankheitsbedingungen erfüllt, können diese akzeptiert werden.

Das Verfahren zur Einstellung des Kraftarbeitspunktes *11* besteht darin, dass der Verbindungsabstand *p(F)* nach (F2) und der Verbindungswinkel *β(p)* nach (F1) ermittelt werden. Jeder Balken kann hierbei als nachgiebiges Element verwendet werden, solange er die Schlankheitsbedingungen erfüllt, einen konstanten Querschnitt über seine Länge *L* besitzt und die zulässigen Spannungen *σ* bei Verformung nicht überschreitet. Die Querschnittsabmessungen nachgiebiger Elemente, deren Länge *L* wie auch das Elastizitätsmodul *E* und zulässigen Spannungen *σ* sind dann bekannt. Durch Umstellen von (F5) kann der minimale Kraftarbeitspunkt $F_{min}$ bestimmt werden. Der maximale Kraftarbeitspunkt $F_{max}$ ergibt sich aus (F6) mit (F7), den Schlankheitsbedingungen unter Berücksichtigung von (F4) und dem bevorzugten Kraftarbeitsbereich $F_{min} < F_{max} < 2,3 F_{min}$. Während der Anwendung der einstellbaren nachgiebigen Führungsvorrichtung mit konstanter Kraft können der Verbindungsabstand und der Verbindungswinkel ebenfalls nach (F2) und (F1) so angepasst werden, dass ein erwünschter Kraftarbeitspunkt *11* eingestellt wird.

**Ausführungsbeispiel 2**

Ein typischer Querschnitt nachgiebiger Elemente ist der Rechteckquerschnitt. Insbesondere ein Querschnitt mit einer Breite *b*, welche deutlich größer als die Höhe *h* eines nachgiebigen Elementes ist, erfüllt die Voraussetzungen für die Verformung in einer Ebene und führt zur geradlinigen Führungsbewegung des Tisches. Die Berechnungsformeln für die Breite *b* und die Höhe *h* ergeben sich aus den Berechnungsformeln (F5) und (F6) für das Flächenträgheitsmoment und die elastische Bewegungsgrenze:

$$h \leq \frac{2\sigma L}{\tilde{M} E} \qquad\qquad (F8)$$

$$b = \frac{12 F_{min} L^2}{\tilde{F} E h^3 n} \qquad\qquad (F9)$$

Um die Schlankheitsbedingungen zu erfüllen, sollte vorzugsweise folgendes erfüllt werden:

$$h \leq \frac{r}{10} \; ; h \leq \frac{L}{10} \qquad\qquad (F10)$$

$$b \leq \frac{r}{10} \; ; b \leq \frac{L}{10} \qquad\qquad (F11)$$

Wie im Ausführungsbeispiel 1 kann die Anzahl der Elemente erhöht werden, um die Schlankheitsbedingungen zu erfüllen.

**Ausführungsbeispiel 3**

Durch Verwenden von vorgebogenen nachgiebigen Elementen kann die maximale Spannung im Element im Bewegungsbereich reduziert werden. Dabei sollte das nachgiebige Element vorzugsweise eine ähnliche Krümmung aufweisen wie ein gerades Element mit gleichen Abmessungen im vorgespannten Zustand, welcher dem erwünschten Kraftarbeitspunkt entspricht. Um die Abweichungen in Bezug auf die Kennlinie mit konstanter Kraft zu reduzieren, muss der Krümmungsradius und/oder mindesten eine Einstellung eines Parameters (Verbindungswinkel *β*, Verbindungsabstand *p*) angepasst werden. Bei stark abweichenden Krümmungen kann eine einstellbare konstante Kraft nicht mehr garantiert werden.

**Vorteile der Erfindung**

- Wegfallen von Schmierung
- kein Verschleiß und Spiel
- leichte Skalierbarkeit
- keine Regelung notwendig
- einfache Balkenform, dadurch einfachere Produktion und Montage
- gleichartige nachgiebige Elemente sind gleichzeitig als Führungselemente und zu verstellende Elemente verwendbar
- geringe Produktionsfehlerquellen
- einfache und schnelle Auslegung der Vorrichtung durch einfache Berechnungsformeln
- anpassbar auf veränderte Umgebungsverhältnisse
- vielseitige Einsatzgebiete

**Gewerbliche Anwendbarkeit**

Die einstellbare vollständig nachgiebige Führungsvorrichtung mit konstanter Kraft besitzt eine große Bandbreite an Anwendungsfeldern: Messtechnik, Wägetechnik, Präzisionstechnik, Nanofabrikation, Biomedizintechnik, Sport- und Reha-Geräte, Automobilindustrie, Robotik etc.

Ein Beispiel für die Anwendung des Führungsvorrichtung mit konstanter Kraft ist der Gravitationsausgleich. Hierbei wird die Vorrichtung so ausgelegt, dass der Kraftarbeitspunkt des zu bewegenden Tisches (auch mit Objekt) bei dem Wert seiner Schwerkraft liegt. Somit werden die nachgiebigen Elemente durch die Schwerkraft des Tisches vorgespannt und die potenzielle Energie wird durch die Schwerkraft des Tisches dem System zugefügt. Für die Bewegung des Tisches wird dann im vorgegebenen Bewegungsbereich kaum Energie benötigt. Dies ist für die Anwendung in Nanopositioniermaschinen prädestiniert. Da die zu bewegenden Objekte auf dem Tisch verschiedene Gewichte aufweisen können, wird eine Vorrichtung benötigt, welche auf verschiedene Kraftarbeitspunkte einstellbar ist. Das geschieht durch die Einstellung des Verbindungsabstandes und des Verbindungswinkels mithilfe eines dafür geeigneten Mittels.

Die einstellbare vollständig nachgiebige Führungsvorrichtung kann auch zur Ermittlung des Gewichtes eines Objektes verwendet werden. Ein Objekt wird auf den Tisch platziert, dann erfolgt die Einstellung aller nachgiebiger Elemente (Verbindungsabstand und -winkel), sodass der Kraftarbeitspunkt erreicht wird. Durch die Auslesung der Einstellung und Position des Tisches mit dem Objekt kann das Gewicht des Objektes ermittelt werden. Somit kann die Führungsvorrichtung auch in der Wägetechnik angewendet werden.

Eine weitere Anwendung ist die Kraftlimitierung. Um Menschen nicht zu verletzen oder Gegenstände nicht zu beschädigen, ist es in der Robotik oder der Medizintechnik wichtig, eine maximale Kraft im vorgegebenen Bewegungsbereich nicht zu überschreiten. Die benötigte konstante Kraft zwischen einem durch die Führungsvorrichtung geführten Arbeitsobjekt und der Person oder dem zu bearbeitenden Gegenstand kann je nach Anwendungsfall variieren und mithilfe dieser Vorrichtung eingestellt werden.

Außerdem kann die vollständig nachgiebige Führungsvorrichtung mit konstanter Kraft in Sport- und Reha-Geräten eingesetzt werden. Um Muskeln über einen vorgegebenen Bewegungsbereich mit der gleichen Kraft zu belasten, wird eine nachgiebige Führungsvorrichtung mit konstanter Kraft benötigt. Durch Einstellbarkeit des Kraftarbeitspunktes ist zusätzlich eine Anpassung an unterschiedliche Trainingskräfte möglich.

**Zitierte Literatur**

[1] Howell, Larry L.; Magleby, Spencer P.; Olsen, Brian M. (2013): Handbook of Compliant Mechanisms. S. 6. DOI: 10.1002/9781118516485.

[2] Rahman, Minhaz Ur; Zhou, Hong (2014): Design of Constant Force Compliant Mechanisms. In: INTERNATIONAL JOURNAL OF ENGINEER-ING RESEARCH & TECHNOLOGY (IJERT) 3 (7), S. 14-19. DOI: 10.17577/IJERTV3IS070028.

[3] Radaelli, G.; Herder, J. L. (2017): Gravity balanced compliant shell mechanisms. In: International Journal of Solids and Structures 118-119, S. 78-88. DOI: 10.1016/j.ijsolstr.2017.04.021.

[4] Tong, Zongdi; Zhang, Xiaozhi; Wang, Guangwei (2023): Automatic Optimization for Compliant Constant Force Mechanisms. In: Actuators 12(2) (61). DOI: 10.3390/act12020061.

[5] Hoetmer, Karin; Woo, Geoffrey; Kim, Charles; Herder, Just (2010): Negative Stiffness Building Blocks for Statically Balanced Compliant Mechanisms: Design and Testing. In: Journal of Mechanisms and Robotics 2 (4), Artikel 041007. DOI: 10.1115/1.4002247.

[6] Wu, Yi-Syuan; Lan, Chao-Chieh (2014): Linear Variable-Stiffness Mechanisms Based on Preloaded Curved Beams. In: Journal of Mechanical Design 136 (12), Artikel 122302. DOI: 10.1115/1.4028705.

[7] Tong, Zongdi; Zhang, Xiaozhi; Wang, Guangwei (2023): Automatic Optimization for Compliant Constant Force Mechanisms. In: Actuators 12(2) (61). DOI: 10.3390/act12020061.

[8] Hasara, Steven Lawrence; Lusk, Craig Perry (2019): Load-adjustable constant-force mechanisms. Veröffentlichungsnr: US11047458B1.

[9] Tolman, Kyler A.; Merriam, Ezekiel G.; Howell, Larry L. (2016): Compliant constant-force linear-motion mechanism. In: Mechanism and Machine Theory 106, S. 68-79. DOI: 10.1016/j.mechmachthe-ory.2016.08.009.

**Patentansprüche**

1. Einstellbare vollständig nachgiebige Führungsvorrichtung zur Führung eines Tisches (4) mit konstanter Kraft entlang einer Führungsrichtung in einem Bewegungsbereich (7), aufweisend ein Gestell (2), mindestens ein nachgiebiges Element (3), mindestens ein Mittel (8) zur Einstellung eines Vorspannungszustandes des mindestens einen nachgiebigen Elements (3), **dadurch gekennzeichnet, dass** ein Ende des mindestens einen nachgiebigen Elements (3) mit dem Tisch (4) orthogonal zu seiner Führungsrichtung verbindbar ist und das andere Ende des mindestens einen nachgiebigen Elements (3) über das Mittel (8) mit dem Gestell (2) verbunden ist, sodass mithilfe des Mittels (8) ein Verbindungsabstand $p$ zum Tisch (4) und ein Verbindungswinkel $\beta$ zum Gestell (2) einstellbar sind, wodurch ein Vorspannungszustand des mindestens einen nachgiebigen Elements (3) und ein Kraftarbeitspunkt (11) der Führungsvorrichtung einstellbar sind.

2. Führungsvorrichtung nach Anspruch 1 **dadurch gekennzeichnet, dass** das Gestell orthogonal zur Führungsrichtung des Tisches (4) positionierbar ist.

3. Führungsvorrichtung nach Anspruch 1 oder 2, **dadurch gekennzeichnet, dass** sie ein oder mehrere nachgiebige vorgespannte Elemente (3) zur Verbindung mit einer Seite des Tisches (4) und eine zusätzliche Parallelführung (1) für den Tisch (4) aufweist.

4. Führungsvorrichtung nach Anspruch 1 oder 2, **dadurch gekennzeichnet, dass** sie mehrere nachgiebige vorgespannte Elemente (3) aufweist, die so angeordnet sind, dass alle Reaktionskräfte und -momente sich in allen Richtungen, die orthogonal zur Führungsrichtung stehen, aufheben.

5. Führungsvorrichtung nach Anspruch 1, **dadurch gekennzeichnet, dass** mehrere nachgiebige Elemente (3) gruppenweise in mindestens zwei Gruppen angeordnet sind, wobei die nachgiebigen Elemente (3) jeder Gruppe in der Summe eine gleiche Querschnittsfläche aufweisen und entweder gespiegelt oder rotationssymmetrisch angeordnet sind.

6. Führungsvorrichtung nach Anspruch 5, **dadurch gekennzeichnet, dass** sich eine kräftefreie Führung durch mindestens zwei Gruppen von bis zum Kraftarbeitspunkt (11) vorgespannten nachgiebigen Elementen (3), die bezüglich einer zur Führungsrichtung orthogonalen Ebene gespiegelt sind, einstellt.

7. Führungsvorrichtung nach Anspruch 5, **dadurch gekennzeichnet, dass** eine leichte Winkelabweichung $\varphi$ der Führungsrichtung von der Orthogonalität zum Gestell (2) kompensiert wird, indem die Gruppen nachgiebiger Elemente (3) an gegenüberliegenden Seiten des Tisches (4) anordenbar sind.

8. Führungsvorrichtung nach Anspruch 5, **dadurch gekennzeichnet, dass** das Gestell (2) um einen zusätzlichen Winkel $\zeta$ gegenüber seiner waagerechten Position neigbar ist, wodurch der Bewegungsbereich (7) des Tisches (4) proportional zu dem Winkel $\zeta$ gekippt wird und geringere Kraftabweichung im Bewegungsbereich erzielt wird.

9. Führungsvorrichtung nach Anspruch 5, **dadurch gekennzeichnet, dass** das Mittel (8) zur Einstellung des Verbindungsabstands $p$ und des Verbindungswinkels $\beta$ zusätzlich einen in vertikaler Richtung einstellbaren Abstand (9) zum Gestell (2) besitzt, wodurch die Lage des Bewegungsbereiches (7) des Tisches (4) mit konstanter Kraft entlang der Führungsrichtung verschiebbar ist.

10. Führungsvorrichtung nach einem der Ansprüche 1 bis 5, **dadurch gekennzeichnet, dass** sie mit einem Tisch (4) mit kleiner oder vernachlässigbarer Masse verbindbar ist, sodass das Gestell (2) mit beliebiger Orientierung im Raum positionierbar ist.

11. Führungsvorrichtung nach einem der Ansprüche 1 bis 10, **dadurch gekennzeichnet, dass** sie mechanische Anschläge (5a, 5b) aufweist, um einen vorgegebenen Bewegungsbereich (7) für den Tisch (4) nicht zu überschreiten.

12. Führungsvorrichtung nach einem der Ansprüche 1 bis 11, **dadurch gekennzeichnet, dass** die nachgiebigen Elemente (3) im nicht vorgespannten Zustand gerade sind.

13. Verfahren zur Dimensionierung und Einstellung einer Führungsvorrichtung nach Anspruch 12, **gekennzeichnet durch** folgende Schritte:

a) Dimensionierung der nachgiebigen Elemente und Findung deren Anzahl durch Vorgabe eines Kräftebereiches eines Kraftarbeitspunktes unter Verwendung der Formeln (F3) bis (F7):

$$L \geq \frac{1}{0{,}15} \cdot \text{Bewegungsbereich } 7 \qquad \text{(F3)}$$

$$r = c_1 L \frac{F_{max}\tilde{F}^4}{F_{min}} + c_2 L \frac{F_{max}\tilde{F}^3}{F_{min}} + c_3 L \frac{F_{max}\tilde{F}^2}{F_{min}} + c_4 L \frac{F_{max}\tilde{F}}{F_{min}} + c_5 L \qquad \text{(F4)}$$

$$I_z = \frac{F_{min}L^2}{\tilde{F}En} \qquad \text{(F5)}$$

$$\frac{h}{2} \leq \frac{\sigma L}{\tilde{M}E} \text{ oder } R \leq \frac{\sigma L}{\tilde{M}E} \qquad \text{(F6)}$$

$$\tilde{M} = d_1 \frac{F_{max}\tilde{F}^2}{F_{min}} + d_2 \frac{F_{max}\tilde{F}}{F_{min}} + d_3 \qquad \text{(F7)}$$

b) Einstellung der nachgiebigen Elemente vor oder während des Einsatzes der Führungsvorrichtung durch die Änderung des Verbindungswinkels β und des Verbindungsabstandes *p* nach den Formeln (F1) und (F2):

$$\beta = \frac{a_1}{L^2} p^2 + \frac{a_2}{L} p + a_3 \qquad \text{(F1)}$$

$$p = b_1 L \frac{\tilde{F}}{F_{min}}^2 F^2 + b_2 L \frac{\tilde{F}}{F_{min}} F + b_3 L \qquad \text{(F2)}$$

wodurch jeder Kraftarbeitspunkt aus dem vorgegebenen Kräftebereich eingestellt werden kann.

14. Tisch (4), ausgestattet mit einer Führungsvorrichtung nach einem der Ansprüche 1 bis 12.

15. Verwendung der Führungsvorrichtung nach einem der Ansprüche 1 bis 12 und/oder des Tisches (4) nach Anspruch 14 zur Bewegung des Tisches (4) mit einem optionalen, sich auf dem Tisch (4) befindlichen Objekt (10) mit konstanter Kraft zum Gravitationsausgleich, zur Kraftbegrenzung, in Nanopositioniermaschinen, in der Kraftmess- und Wägetechnik zur Ermittlung der Masse, in der Roboter- und Greifertechnik, in der Medizintechnik sowie zur Krafteinstellung in Sport- und Reha-Geräten.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

```
                    ┌─────────┐
                    │  Start  │
                    └────┬────┘
                         │
              ┌──────────┴──────────────┐
             /   Eingabe:                /
            / Kraftarbeitsbereich F ∈ [F_min; F_max] /
           /  Bewegungsbereich > 0     /
          /   Balkenanzahl n ∈ ℕ      /
         /    Material: E, σ_max      /
        └──────────┬──────────────────┘
                   │
            ┌──────┴───────┐
            │ Berechnen L  │
            │ nach (F3)    │
            └──────┬───────┘
                   │
            ┌──────┴───────┐
            │ Berechnen M̃  │
            │ nach (F7)    │
            └──────┬───────┘
                   │
            ┌──────┴───────┐
            │ Berechnen r  │
            │ nach (F4)    │
            └──────┬───────┘
                   │
            ┌──────┴───────┐
            │ Berechnen max│
            │    h/R       │
            └──────┬───────┘
```

$F \in [F_{min}; F_{max}]$

Eingabe:
Kraftarbeitsbereich $F \in [F_{min}; F_{max}]$
Bewegungsbereich $> 0$
Balkenanzahl $n \in \mathbb{N}$
Material: $E, \sigma_{max}$

Berechnen $L$ nach (F3)

Berechnen $\widetilde{M}$ nach (F7)

Berechnen $r$ nach (F4)

Berechnen max. $h/R$

Berechnen Querschnittsabmessungen aus $I_z$ nach (F5)

max. $h/R$ verkleinern

$n = n + 1$

Schlankheitsbedingungen erfüllt?

$h/R$ zu groß?

Nein

Ja

Nein

Ja

Ausgabe: Querschnittsabmessungen

Ende

Europäisches Patentamt

European Patent Office

Office européen des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 24 40 088 A1 (CITIZEN WATCH CO LTD) 6. März 1975 (1975-03-06)<br><br>* Seite 3, Absatz 1 - Seite 4, Absatz 3; Abbildungen 1-3 *<br>----- | 1-5, 7-12,14, 15 | INV.<br>F16M11/04<br>F16M11/42<br>F16F7/14 |
| X | EP 2 901 099 B1 (KRAUSS MAFFEI WEGMANN GMBH & CO KG [DE]) 23. Januar 2019 (2019-01-23)<br>* Absätze [0029], [0044] - [0046]; Abbildungen 1-13 *<br>----- | 1-8,12, 14,15 | |
| X | DE 40 11 963 A1 (BRENDEL HUBERT DR ING [DE]) 18. Oktober 1990 (1990-10-18)<br>* Spalte 4, Zeilen 41-49; Anspruch 1; Abbildungen 4-5 *<br>----- | 1-5,7,8, 12,14,15 | |

| RECHERCHIERTE SACHGEBIETE (IPC) |
|---|
| F16M<br>F16F |

Der vorliegende Recherchenbericht wurde für alle Patentansprüche erstellt

| Recherchenort | Abschlußdatum der Recherche | Prüfer |
|---|---|---|
| Den Haag | 26. September 2025 | Lantsheer, Martijn |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 40 1001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2025

| Im Recherchenbericht angeführtes Patentdokument | Datum der Veröffentlichung | Mitglied(er) der Patentfamilie | Datum der Veröffentlichung |
|---|---|---|---|
| DE 2440088 A1 | 06-03-1975 | DE 2440088 A1 | 06-03-1975 |
| | | GB 1454919 A | 10-11-1976 |
| | | JP S553679 B2 | 26-01-1980 |
| | | JP S5045662 A | 23-04-1975 |
| | | US 3935486 A | 27-01-1976 |
| EP 2901099 B1 | 23-01-2019 | DE 102012109190 A1 | 27-03-2014 |
| | | EP 2901099 A1 | 05-08-2015 |
| | | ES 2712680 T3 | 14-05-2019 |
| | | WO 2014048420 A1 | 03-04-2014 |
| DE 4011963 A1 | 18-10-1990 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11047458 B1

**In der Beschreibung aufgeführte Nicht-Patentliteratur**

- **HOWELL, LARRY L.** ; **MAGLEBY, SPENCER P.** ; **OLSEN, BRIAN M.** *Handbook of Compliant Mechanisms*, 2013, 6
- **RAHMAN, MINHAZ UR** ; **ZHOU, HONG**. Design of Constant Force Compliant Mechanisms. *INTERNATIONAL JOURNAL OF ENGINEER-ING RESEARCH & TECHNOLOGY (IJERT)*, 2014, vol. 3 (7), 14-19
- **RADAELLI, G.** ; **HERDER, J. L.** Gravity balanced compliant shell mechanisms. *International Journal of Solids and Structures*, 2017, vol. 118-119, 78-88
- **TONG, ZONGDI** ; **ZHANG, XIAOZHI** ; **WANG, GUANGWEI**. Automatic Optimization for Compliant Constant Force Mechanisms. *Actuators*, 2023, vol. 12 (2), 61
- **HOETMER, KARIN** ; **WOO, GEOFFREY** ; **KIM, CHARLES** ; **HERDER, JUST**. Negative Stiffness Building Blocks for Statically Balanced Compliant Mechanisms: Design and Testing. *Journal of Mechanisms and Robotics*, 2010, vol. 2 (4)
- **WU, YI-SYUAN** ; **LAN, CHAO-CHIEH**. Linear Variable-Stiffness Mechanisms Based on Preloaded Curved Beams. *Journal of Mechanical Design*, 2014, vol. 136 (12)
- **HASARA, STEVEN LAWRENCE** ; **LUSK, CRAIG PERRY**. *Load-adjustable constant-force mechanisms*, 2019
- **TOLMAN, KYLER A.** ; **MERRIAM, EZEKIEL G.** ; **HOWELL, LARRY L.** Compliant constant-force linear-motion mechanism. *Mechanism and Machine Theory*, 2016, vol. 106, 68-79